# EUROPEAN PATENT APPLICATION

(11) **EP 4 589 140 A1**
(43) Date of publication of application: **23.07.2025**
(21) Application number: 24152748.0
(22) Date of filing: 19.01.2024
(51) Int. Cl.: F03D 13/10

(54) **METHOD FOR INSTALLING A ROTOR BLADE ON A WIND TURBINE AND HANDLING TOOLKIT FOR SUPPORTING A ROTOR BLADE**

(71) Applicant: Siemens Gamesa Renewable Energy A/S, 7330 Brande (DK)
(72) Inventor: Pedersen, Jesper Bjerre, 7160 Torring (DK); Soerensen, Johnny, 6920 Videbaek (DK)
(74) Representative: SGRE-Association

(57) **Abstract**

Method for installing a rotor blade (1) on a wind turbine (2) comprising the steps of supporting the rotor blade (1) in a mounting position (9) by a support structure (10) in such a way, that, at least in a supported section (11) of the rotor blade (1), a longitudinal direction (12) of the rotor blade (2) extends at an angle of less than 45° to a horizontal plane (20), wherein the support structure (10) comprises a support means (13) forming a support surface (21) that is contacting an outer surface (39) of the rotor blade (2), while the rotor blade (2) is supported by the support structure (10), a base (14), and a connection means (15) that connect the support means (13) to a connection area (16) of the base (14) that is arranged at a height below the lowest point (47) of the support surface (21), wherein the connection means (15) is sufficiently rigid to vertically support at least part of the combined weight of the support means (13) and the rotor blade (1) and to allow for a transfer of forces that have a force component within the horizontal plane (20) and/or of a torque between the support means (13) and the connection area (16) of the base (14), mounting the rotor blade (1) to a rotatable component (6) of the wind turbine (2), in particular to a hub, while the rotor blade (1) is supported by the support structure (10), and moving or disassembling the support structure (10) and/or rotating a nacelle (5) to allow for a rotation of the rotatable component (6).

## Description

### FIELD OF THE INVENTION

The present invention relates to a method for installing a rotor blade on a wind turbine, in particular on an offshore wind turbine, further in particular on a floating offshore wind turbine. Additionally, the invention relates to a handling toolkit for supporting a rotor blade, a system comprising a wind turbine and a method for operating a wind turbine and/or for feeding electrical and/or chemical energy to an electricity and/or chemical grid.

### BACKGROUND

One challenge in constructing and servicing modern wind turbines is the installation and/or replacement of rotor blades and any servicing that requires the rotor blades to be temporarily disconnected from the hub or in general the rotating component of the wind turbine, since the rotor blade needs to be held in a defined position at least during the mounting and unmounting of the rotor blade to or from the rotatable component. In most cases, a large crane is used to handle the rotor blades during these procedures, wherein the rotor blades can be attached to the crane by clamping means attached to the rope of the crane. Tools for guiding the connection area of the rotor blade to the connection area of the hub of the wind turbine are known, e.g., from the document US 11,174,845 B2. An installation or an unmounting of the rotor blades, while using a crane to support the rotor blade, does however remain challenging in many cases and can, e.g., be limited to certain weather conditions, e.g., to calm seas and low wind speeds.

it is an objective problem to provide an optimized solution and to avoid disadvantageous functionalities, in particular to optimize with respect to the costs, time and effort required for mounting a rotor blade.

### SUMMARY

According to an aspect, the problem is solved by providing a method for installing a rotor blade on a wind turbine, in particular on an offshore wind turbine, further in particular on a floating offshore wind turbine, comprising the steps of supporting the rotor blade in a mounting position by a support structure in such a way, that, at least in a supported section of the rotor blade, a longitudinal direction of the rotor blade extends at an angle of less than 45°, in particular of less than 30° or less than 15°, to a horizontal plane, wherein the support structure comprises
a support means forming a support surface that is contacting an outer surface of the rotor blade, while the rotor blade is supported by the support structure,
a base, and a connection means that connects the support means to a connection area of the base that is arranged at a height below the lowest point of the support surface,
wherein the connection means is sufficiently rigid to vertically support at least part of the combined weight of the support means and the rotor blade and to allow for a transfer of forces that have a force component within the horizontal plane and/or of a torque between the support means and the connection area of the base,
mounting the rotor blade to a rotatable component of the wind turbine, in particular to a hub, while the rotor blade is supported by the support structure, and
moving or disassembling the support structure and/or rotating a nacelle, which is mounted rotatably about a longitudinal axis of a tower of the wind turbine and which rotatably supports the rotatable component, to allow for a rotation of the rotatable component.

In particular the problem is solved by providing a Handling toolkit, a system, and a method for operating a wind turbine according to the independent claims.

By using the support structure to support the rotor blade in a mounting position, in which the longitudinal direction of the rotor blade is at least approximately aligned with the horizontal plane, and in which the rotor blade is in particular already arranged at the correct height at which the rotor blade is to be attached to the rotatable component, an alignment of the respective connection means of the rotor blade and the rotatable component, e.g., a respective flange, can be performed by moving the rotor blade within the horizontal plane. Due to the rigidity of the connection means, the position of the rotor blade within the horizontal plane can however be precisely controlled by the movement of the connection area of the base and/or the complete base. In particular, actuators of the base can also allow for an adjustment of the height and/or the orientation at which the rotor blade is arranged, e.g., to fine tune the mounting position. Since the base can be installed at a relatively low working height, e.g., on the deck of a jack-up-vessel or of a floating device, a precise control of the position of the rotor blade that is arranged at the height of the upper end of the wind turbine tower or even above that upper end, can be actuated by actuators or other means close to the bottom of the tower and/or close to the sea level, e.g., by actuators of the base.

The feature, that the connection means is sufficiently rigid to vertically support at least part of the combined weight of the support means and the rotor blade, can, in other words, mean in particular, that the connection means does not irreversibly deform when vertically supporting the full combined weight or a given part of this combined weight. The support means can, e.g., be configured to support at least 10 % or at least 50% or at least 90% of this combined weight. In a preferred embodiment, the support means is designed to vertically support the full combined weight of the connection means and the rotor blade.

The feature, that the connection means is sufficiently rigid to allow for a transfer of forces that have a force component within the horizontal plane and/or of a torque between the support means and the connection area of the base, can, in other words, be understood to mean in particular that a force with a component within the horizontal plane and/or a torque can be applied to the connection area of the base by applying a force and/or a torque to the end of the connection means connected to the support means and vice versa.

In other words, the connection means can be configured to vertically support at least part of the combined weight of the support means and the rotor blade and to transfer forces that have a force component within the horizontal plane and/or a torque between the support means and the connection area of the base.

The use of the support structure that has connection means with a sufficient rigidity also avoids or at least strongly reduces an uncontrolled movement of the rotor blade that could potentially be present when the rotor blade would be supported by a crane or a similar device, e.g., due to a swinging and/or twisting of the crane rope due to wind. This is especially relevant, when a relative movement between the crane and the rotatable component of the wind turbine can hardly be avoided, e.g., in the case of floating offshore wind turbines and/or when the support structure cannot be supported by a jack-up-vessel, and/or when strong and varying winds are present or expected. The compensation of such an uncontrolled movement is very challenging when the rotor blade is supported by flexible means, e.g. via the rope of a crane. Such an uncontrolled movement makes it harder to successfully install the rotor blade and can even cause a risk of damaging the rotor blade and/or the wind turbine.

Since such an uncontrolled movement is avoided or at least strongly reduced by the use of the sufficiently rigid connection means in the inventive method, the inventive method can be used in situations, in which a support by a crane would not allow for a mounting of the rotor blade, e.g., in wind and/or sea conditions that would otherwise require the work to pause. This is especially relevant when constructing and/or servicing a floating wind turbine at sea.

In particular, the method can allow the implementation of a service concept for a floating offshore wind turbine, that allows for an installation and/or servicing of rotor blades while keeping the wind turbine at its location that it occupies during normal operation. As discussed in more detail below, the method can especially be used, while the support structure is supported by a floating device. This allows for a robust support of the rotor blade, even when the use of a jack-up vessel is impossible at the location of the wind turbine, e.g. due to the depth of the surrounding water.

The rotor blade can be directly or indirectly mounted to a rotor of the wind turbine, that is in particular coupled to a generator of the wind turbine. In particular the rotatable component can be a rotor hub of the wind turbine.

The support structure can comprise multiple instances of the support means and/or the connection means and/or the base. It is, e.g., possible that a single support means is supported by multiple connection means that are connected to a common base or to a respective base. Alternatively multiple support means spaced along the rotor blade could be used, that can, e.g., be supported by respective connection means, wherein the multiple connection means can either connect to a respective base or to a single common base.

To avoid a tilting of the rotor blade and/or the exertion of a large torque on the connecting means and/or the base, e.g., when the rotor blade is clamped by the support means, as discussed later, the supported section of the rotor blade preferably comprises the center of gravity of the rotor blade. It is however also possible, that multiple sections of the rotor blade are supported, e.g., by multiple separate support means of the support structure. In this case, the lengthwise position of the center of gravity of the rotor blade can also be arranged between the supported sections.

The support structure can be formed by multiple separate modules. It is, e.g., possible that a commercial component that allows for a motion compensation on a barge or a vessel is used as the base or as part of the base. The support means can, e.g., be formed from the clamping means that are already used in the prior art when handling wind turbines by a crane. These can be used without changes or modified for the use in the support structure. Alternatively, a custom component can be used to form the support means.

The connection means can, e.g., be formed by a lattice structure and can in particular form an identical or similar structure to a typically tower of a crane. This is advantageous to reduce the weight of the support structure. It would however also be possible to use any other sufficiently rigid structure, e.g., a single or multi-segmented concrete or a steel tower to form the connection means.

It is especially possible, that the connection means is formed by multiple separate segments. It can especially be formed from multiple segments that are vertically stacked in the lengthwise direction of the connection means in the working position of the connection means, in which it is used to support the support means and therefore the rotor blade. Such segments can, e.g., be connected by bracing or a bolted connection. The use of multiple segments to form the connection means especially allows for an adjustment of the height of the support structure by adding or removing sections. This allows for an easy adjustment of the height of the support structure to, e.g., allow for a use in the construction and/or servicing of different wind turbines. While a certain amount of height adjustment can, e.g., be possible by using actuators of the base, the height of different wind turbines can vary drastically and it can therefore be advantageous to adjust the height of the connection means. Since such an adjustment is typically only rarely performed, e.g., when moving the support structure between different wind parks using different types of wind turbines, an adjustment of the number of segments for the connection means can be advantageous over the use of an elaborate mechanism for adjusting the length of the connection means without any required assembly or disassembly.

In the case of a straight rotor blade, the longitudinal direction of the rotor blade can, e.g., be defined as the direction of the line connecting the center of the blade root of the rotor blade to the tip of the rotor blade. The blade root is defined as the end section of the blade that is used to connect the rotor blade to the rotatable component of the wind turbine, especially to a rotor blade bearing for the rotor blade. When of the rotor blade is curved, the longitudinal direction is considered to extend along the curve of the blade. To clearly define the longitudinal direction, the curve of the rotor blade can be traced along a distinct feature, in particular along a span-wise end of the rotor blade, further in particular along the span-wise end forming the backside of the rotor blade during the rotation of the rotatable component during the normal operation of the wind turbine.

In the following description, most features will be described with respect to a global coordinate system spanned by the vertical direction and the horizontal plane. In particular, the vertical direction essentially corresponds to the longitudinal direction of the tower of the wind turbine. The angle between the longitudinal direction of the tower and of the vertical direction can in particular be less than 5° or less than 10°. The two directions spanning the horizontal plane can especially be chosen in such a way, that a first one of these directions corresponds to the longitudinal direction of the rotor blade, at least in the supported section of the rotor blade. The other direction spanning the horizontal plane can be chosen orthogonal to this direction.

Once the support structure is no longer needed, it can be removed and/or disassembled, to allow for a free rotation of the rotatable component. When rotor blades are to be supported at different mounting areas of the rotatable component, e.g., to mount multiple rotor blades, a rotation of the rotatable component, that could be hindered by the support structure, is often necessary when a new one of the mounting areas is to be moved towards the support structure. While it is possible, to move the support structure sufficiently far away from the rotatable component for this purpose, it is also possible to rotate the nacelle instead. This can rotate the plane of rotation of the rotor blades and therefore allow for a rotation of the rotatable component, while the support structure remains in place.

The base of the support structure can be installed on a floating device, in particular on a barge or a vessel, floating on or in a body of water. This configuration is advantageous, when the rotor blade is to be mounted to an offshore wind turbine or in particular to a floating offshore wind turbine. In particular, when implementing a motion compensation, e.g., by actuators in the base as discussed later, such a configuration can allow for a support of the rotor blade during its mounting without requiring a jack-up-vessel and/or without requiring the wind turbine to be relocated to shallow waters.

The supported weight of the rotor blade will increase the amount of water displaced by the floating device. It is especially possible, that the floating device is not supported against the sea floor or any other floor below the body of water. It can be advantageous, when a surface of the floating device that supports the base is arranged above the water surface, while the support structure is supporting the rotor blade, e.g., to allow for an easy access to relevant components for personal and/or to avoid the need to sufficiently seal actuators and/or other components to allow for full submersion. On the other hand, the use of a floating device that is fully submerged when supporting the rotor blade via the support structure can be advantageous to reduce the influence of choppy sea on the movement of the floating device and/or to allow for a height adjustment by filling or emptying ballast tanks of the floating device.

The floating device can have its own propulsion system for moving the floating device to the vicinity of the wind turbine and/or to position the rotor blade into the mounting position or an intermediate position, while it is already supported by the support structure. Such a propulsion system can also be used to hold the floating device in a controlled position, e.g., using feedback from the sensors discussed below.

It is however also possible, that the floating device does not have its own propulsion system. In this case the floating device can be pulled into the desired position, e.g., by at least one tug boat, in particular by two tugboats. Since the support system is rather large, the floating device can also be formed by multiple floating components. It is, e.g., possible, to combine multiple barges, e.g. four barges, into a single floating device to support the support structure.

The floating device can comprise at least one interlocking device, in particular a clamp, that interlocks with at least one component of the wind turbine, while the rotor blade is supported in the mounting position, to block or limit a relative movement between the floating device and the wind turbine.

It is possible, to use a single interlocking device, that is designed to keep the distance between the part of the floating device, on which the interlocking device is mounted, and the component of the wind turbine, e.g., a floating base of the wind turbine, at least approximately constant. This can, e.g., be achieved by using a clamp or a similar device that is attached to the floating device.

The interlocking device can be designed in such a way, that any lateral movement around the interlocking point by the floating device is blocked or that a frictional force resisting such a lateral movement is present. Any remaining lateral movement can, e.g., be compensated by a propulsion system of the floating device and/or by actuators of the base, if necessary.

It is however also possible, to use at least two interlocking devices that connect to two different spots on the wind turbine that are spaced apart from each other in the horizontal direction, therefore keeping the relative horizontal position and orientation of the floating device and the wind turbine at least approximately constant.

In an advantageous embodiment, at least one sensor is used to determine on the one hand, a relative position and/or a relative orientation of the rotor blade and/or the support means and/or a component that is rigidly attached to the support means with respect to at least one reference component of the wind turbine, and/or on the other hand, a movement of the rotor blade and/or at least one component of the support structure. At least one actuator of the base can then be controlled based on the relative position and/or the relative orientation and/or the movement, to shift the connection area of the base in at least one direction and/or to rotate the connection area of the base around at least one axis with respect to a reference surface on which the base of the support structure is arranged. The reference surface can in particular be the deck of a floating device.

Due to the rigidity of the connection means, the position and orientation of the rotor blade can be adjusted by shifting and/or rotating the connection area of the base. The discussed control scheme to control the shifting and/or rotation of the connection area can be used for different purposes, as discussed below. Preferably the base comprises multiple actuators to allow for multiple, preferably three, directions of shifting and/or multiple, preferably three, axes of rotation.

Motion compensation systems that can be used as the base or as part of the base of the support structure with a sufficient load bearing capacity and with a movement range and speed that are well-suited to compensate the influence of waves and/or currents influencing a floating device, are commercially available. It would, e.g., be possible to use the BM-T700 platform available from Barge Master BV in the Netherlands. Alternatively, any platform that is sufficiently load bearing and that can be shifted and/or rotated and/or tilted by at least one actuator could be used as the connection area of the base.

When larger shifting distances are desired, it can be advantageous to support a lower part of the base on rails to allow for a largescale horizontal movement by at least one first actuator. The connection area of the base can then be formed by an upper part of the base that is movable and/or rotatable with respect to the lower part by at least one second actuator, in particular to allow for a rotation of the connection area around at least one axis, a vertical positioning and/or a further control of the horizontal position.

In particular, a relative position and/or orientation with respect to the rotatable component and/or a nacelle that rotatably supports the rotatable component can detected by the sensor or at least one of the sensors. The rotatable component and/or the nacelle can therefore be used as the reference component.

The relative position and/or orientation can, e.g., be detected by a distance sensor, in particular by a laser distance sensor, and/or a camera, in particular by using image processing to detect specific features of the reference component, when the sensor is arranged at the support structure or the rotor blade, or of the rotor blade or the support structure, when the sensor is arranged at the reference component. It is in particular possible to the use a 3D-camera, in particular a stereoscopic camera and/or a laser scanner, to provide three-dimensional information for the image processing discussed above.

When an initial relative position and/or orientation is known, the current relative position and/or orientation can additionally or alternatively be determined by an integration over a movement detected by a motion sensor. It would, alternatively or additionally, be possible to use any other means suitable for detecting a relative movement, a relative position and/or a relative orientation of different components, especially in a contact free manner.

The or a respective sensor can on the one hand be arranged on the rotor blade, the support means or component that is rigidly attached to the support means, and/or on the other hand to the reference component. It would however also be possible, to place the sensor or one of the sensors in such a way, that it senses both the reference component and at least one component of the support structure and/or the turbine blade, to determine the relative position and/or orientation. Additional markers can be attached to at least one component detected by the sensor to improve the robustness and/or the accuracy of the detection.

On the one hand, the actuator of the base can be used to compensate a movement of the reference surface due to outside forces at least partially. This is especially relevant when the reference surface is formed by a floating device, e.g., by the deck of a ship or a barge.

The actuator of the base can, in particular, be controlled in such a way, as to reduce a movement of the support structure when the floating device forming the reference surface is moved due to a movement of water in the body of water. When a floating device is used to provide the reference surface, the reference surface can tilt and shift due to waves and/or other currents. Since the mounting position is typically relatively high above the reference surface, even a small tilt of the reference surface would result in a relatively strong movement of the supported rotor blade, when the support means would be rigidly connected to the reference surface. This effect can be at least partially compensated with the discussed control of the actuator of the base.

Since a tilting and/or shifting of the reference surface due to a water movement, in particular due to waves, typically results in an at least approximately periodic movement of the reference surface, such a movement can in particular be compensated by measuring an actual movement of the support structure and/or the rotor blade and by using this measurement data to control the actuator. The measurement data can in particular be scaled and/or delayed to create a defined phase shift to generate a control signal for driving the actuator. The movement can in particular be detected by using an acceleration sensor. The sensor for detecting the movement can preferably be arranged relatively high above the reference surface, e.g., at or a close to the height of the support surface, since the scale of the detected movement due to a tilting of reference surface will typically scale with the height.

Alternatively or additionally, the detected relative position and/or relative orientation can be used to reduce the movement of the support structure when the floating device forming the reference surface is moved by the water. It is, e.g., possible that the actuator is controlled based on an error signal that is determined based on the difference between a defined desired relative position and/or orientation and the actual measured position and/or orientation to minimize the error signal.

On the other hand, the actuator of the base can additionally or alternatively be used to shift and/or to rotate the connection area of the base to actively change the position and/or orientation of the rotor blade.

In particular, the mounting position can correspond to a given relative position and/or a given relative orientation of the rotor blade and/or the support means and/or a component that is rigidly attached to the support means with respect to at least one reference component of the wind turbine. The inventive method can then comprise the additional steps of
supporting the rotor blade in an intermediate position by the support structure in such a way, that, at least in a supported section of the rotor blade, the longitudinal direction of the rotor blade extends at an angle of less than 45°, in particular of less than 30° or less than 15°, to the horizontal plane, and
moving the rotor blade from the intermediate position to the mounting position by controlling the actuator to iteratively reduce on the one hand the distance between the determined relative position and the given relative position and/or on the other hand the difference between the determined relative orientation and the given relative orientation.

The shifting and/or rotation of the connection area of the base can therefore be used to move the rotor blade into the mounting position. It is in particular possible, that the intermediate position is chosen such, that there is still a certain distance between the rotatable component and the root of the rotor blade. During the positioning of the rotor blade into this intermediate position, a detailed control of the position and the movement of the rotor blade is less essential, since the rotor blade or parts of the support structure and components of the wind turbine will not touch and therefore potentially damage each other, even when a relatively large error of the position and/or orientation occurs in the intermediate position, due to the distance between these components in the intermediate position.

The mounting position is preferably chosen in such a way, that the rotor blade can be directly attached to the rotatable component in this mounting position without any further movement of the rotor blade with respect to the rotatable component. It is therefore, e.g., possible that the end of the rotor blade that is to be attached to the rotatable component already touches the rotatable component in a connection area of the rotatable component.

To further improve the guidance of the rotor blade when moving it from the intermediate position to the mounting position, an additional tool, e.g. the tool known from the initially cited document US 11,174,845 B2, can be used.

It is also possible to use such a tool instead of the previously discussed actuators to move the rotor blade from an intermediate position to the mounting position. It is, e.g., possible, that the rotor blade can slide for a short distance on the support surface and can therefore be pulled towards the rotatable component by such a tool. Additionally or alternatively, is also possible that the position of the floating device, on which the base is located, can be changed by pulling the rotor blade to the mounting position by such a tool.

The support means can comprise a first section forming the support surface and a second section forming a clamping surface, wherein the turbine blade is clamped between the support surface and the clamping surface, while the rotor blade is being mounted to the rotatable component. The second section can be moved with respect to the first section before or during the removal or disassembly of the support structure and/or before the rotation of the nacelle before the support surface is separated from the blade to unclamp the rotor blade. By clamping the rotor blade between the support surface and the clamping surface, it can be robustly held in place with low technical complexity.

The clamping can in particular be performed after the rotor blade is placed on the support surface. While it is in principle possible, to rely on gravity and friction to keep the rotor blade in place on the support surface, the clamping can ensure that the position of the rotor blade with respect to the support surface is fixed and that the rotor blade cannot fall off the support surface, even when the support surface is moved to move the rotor blade and/or if there is a strong movement of the support surface, e.g., due to the movement of the floating device carrying of the support structure.

The first and second section of the support means are preferably connected to each other by a mechanism that allows for a movement of the second section with respect to the first section along a defined movement path. The second section can in particular be hinged to the first section to allow it to be swiveled to clamp and unclamp the rotor blade. The movement of the second section with respect to the first section can in particular be driven by an actuator of the support structure.

The connection means can be mounted to the base by a hinge, which is used to pivoted the connection means from an initial position upwards into a working position, wherein a pivoting of the connection means around the hinge is blocked once the working position of the connection means is reached, to hold the connection means in the working position, while the support structure is used to support the rotor blade in the mounting position.

Since the support structure needs to support the rotor blade at the height of the rotating component, e.g., at the height of the hub of the wind turbine, it needs to have a rather large vertical extension of, e.g., 50 m to 150 m, when the support structure is used to support the rotor blade in the mounting position. As previously discussed, a vessel, a barge or another floating device can be used to support of the base. When the support structure would already extend to a large height, while the support structure is being transported to the site of the wind turbine on such a floating device, a continuous operation of the previously discussed motion compensation system would typically be necessary during this transport. It is therefore typically advantageous to transport the support structure, while it is essentially lying flat.

Using a hinge between the connection means and the base allows for a relatively fast deployment of the support structure by pivoting the connection means to the working position. A further advantage of this approach to erecting the support structure is, that it requires no or very little human interaction with the components. If any human interaction is necessary, work can typically be performed at a low height, e.g., close to the deck of the floating device.

The pivoting of the connection means can, e.g., be driven by a winch that is arranged on top of a pole or tower that is in particular lower than the height of the connection means in the working position and that is particular arranged relatively close to the hinge. The connection means can lie approximately flat in the storage position. It is, e.g., possible that the longitudinal direction of the connection means extends at an angle of less than 30° or less than 15° to the horizontal plane while the connection means is in the storage position. To facilitate the pivoting when using a winch, it can be advantageous, when the longitudinal direction already extends slightly upward from the hinge, e.g., at an angle of at least 3° or at least 5 ° to the horizontal plane, while the connection means is in the storage position. While it would be in principle possible, to directly drive the rotation of the connection means by a motor at the hinge or similar means, the use of a winch to pull the connection means upwards typically requires a lower torque of the motor and is therefore easier to implement.

When a winch is used to pivot the connection means into the working position, the pivoting can especially be stopped by a stop in the working position. In this case the pivoting can be blocked by locking the winch and/or by continuing to exert a pivoting force against the stop by the winch once the working position is reached. In particular the connection means is also held in the working position by blocking a pivoting around the hinge, while the support structure is used to support the rotor blade in the intermediate position.

The rotor blade can already be clamped between the support surface and the clamping surface, while the connection means is pivoted from the initial position or a clamping position at which of the clamping is performed to the working position. In this case the pivoting of the connection means is used, to lift the rotor blade into the mounting position or the intermediate position. It is therefore not necessary, to use additional means, e.g., a crane, to lift the rotor blade to the height of the mounting position or the intermediate position. Remaining, typically relatively small adjustments to the height of the rotor blade can then, in particular, be performed by the actuator or by one of the actuators of the platform as discussed above.

The initial clamping of the rotor blade can therefore, e.g., be performed on the deck of the floating device or of a further floating device to which the support structure extends, while the connection means is in the initial or in the clamping position. The positioning of the rotor blade prior to the clamping can, e.g., be performed by a crane. Since the clamping happens at a relatively low height, a relatively small crane that does not need to reach the height of the mounting position can be used for this purpose.

Alternatively the rotor blade can be lifted onto the support surface using a crane, wherein the rotor blade is either placed directly in the mounting position by placing it onto the support surface or placed in the or an intermediate position by placing it onto the support surface and moved from the intermediate position to the mounting position by conjointly moving the support means and the connection area of the base without changing the relative position of the support means and the connection area of the base.

This approach can, e.g., be advantageous when the complexity of the support structure should be further limited by avoiding the use of the clamping means and/or of the hinge between the base and connection means and/or when the geometry of the floating device carrying the support structure is not appropriate for lifting the rotor blade by swiveling the connection means into the working position. The crane can in particular be a part of the support structure or it can be mounted to a component of the support structure that is, in particular, arranged in the upper third or fifth of the support structure. The crane can, e.g., be attached to the support means and/or the connection means, especially to the upper part, e.g., to the upper 30% or the upper 10%, of the connection means when the connection means is in the working position.

A damper, in particular a tank that is partially filled with a fluid and/or a weight that is movable by an actuator with respect to the support means, can be attached to the support means or an upper section of the connection means and used to dampen an oscillatory movement of the support means, while the support structure is used to support the rotor blade in the mounting position.

As discussed above, the reference surface on which the base is placed, e.g. the deck of a vessel, can be tilted in a pseudo-periodic fashion by the movement of water, in particular by waves. Even when using a motion compensation via the at least one actuator of the base, it can be challenging to dampen out any oscillation of the upper end of the support structure completely or at least largely. It can therefore be advantageous to use an additional damper that is arranged in the upper part of the support structure. In some cases, such a damper can sufficiently dampen oscillations by itself and it can therefore be possible, to not use the active damping by an actuator of the base that was described above.

A tank that is only partially filled with a fluid can also be called a slush-damper. Such a damper dampens oscillations by dissipating the oscillatory energy due to the internal friction of the fluid. Such dampers can be implemented with relative ease and at low cost. By positioning such a damper away from the connection point between the support means and the connection means, an additional torque can be applied to the support means. This can be advantageous to compensate a torque that is exerted by the rotor blade, when the center of gravity of the rotor blade does not coincide with the position at which the support means is supported by the connection means.

A damping of an oscillation can additionally or alternatively be achieved by using a movable weight. The movement of the upper section of the support structure can be determined by using a sensor, e.g. an acceleration sensor, as discussed above, and the measurement signal of the sensor can, e.g., be phase shifted and/or scaled and the resulting control signal can be fed back to the actuator that is moving the movable weight. Such a movable weight can additionally or alternatively be used to arbitrarily shift the center of gravity of the arrangement formed by the support means and the rotor blade, therefore allowing for an even better compensation of a torque exerted by the rotor blade.

A respective enabling condition can be evaluated before at least one of the steps of supporting the rotor blade in the mounting position, moving the rotor blade from the intermediate position to the mounting position, supporting the rotor blade in the intermediate position, pivoting the connection means from the initial position upwards into the working position, and lifting the rotor blade onto the support surface. The enabling condition can evaluate a provided weather forecast information and/or sensor data acquired by at least one sensor. The sensor data can describe on the one hand a movement of the rotor blade and/or at least one component of the support structure, and/or on the other hand a relative position and/or a relative orientation of the rotor blade and/or of the support means and/or of a component that is rigidly attached to the support means with respect to at least one reference component of the wind turbine. When the enabling condition is not fulfilled, the installation of the rotor blade can be temporarily paused or aborted and delayed until the enabling condition is fulfilled.

As previously discussed, it can be advantageous to use various sensors in the discussed method to monitor the position and/or orientation and/or movement of various components. The sensors, especially in conjunction with by the weather forecast data, can however also be used to predict, if the current conditions and/or possible future conditions allow for an installation of the rotor blade without risking damage to any of the involved components or tools. Even if no such sensors are present, the evaluation of such an enabling condition can be advantageous. It could, e.g., be possible to purely rely on weather forecast information, that can, e.g., be provided by radio or a satellite communication, or it can even be advantageous to install sensors purely for the purpose of evaluating the enabling condition.

While the discussed method only concerns the installation of the rotor blade, the discussed approach for supporting the rotor blade can also be used when uninstalling the rotor blade, e.g., during a servicing of the rotor blade or when exchanging the rotor blade.

Therefore, a method for uninstalling a rotor blade from a wind turbine is also disclosed. This method comprises the steps of
supporting the rotor blade in its mounted position by a support structure in such a way, that, at least in a supported section of the rotor blade, the longitudinal direction of the rotor blade extends at an angle of less than 45°, in particular of less than 30° or less than 15°, to a horizontal plane, wherein the support structure comprises
a support means forming a support surface that is contacting an outer surface of the rotor blade, while the rotor blade is supported by the support structure, a base, and
a connection means that connects the support means to a connection area of the base that is arranged at a height below the lowest point of the support surface,
wherein the connection means is sufficiently rigid to vertically support at least part of the combined weight of the support means and the rotor blade and to allow for a transfer of forces that have a force component within the horizontal plane and/or of a torque between the support means and the connection area of the base,
unmounting the rotor blade from a rotatable component of the wind turbine, in particular from a hub, while the rotor blade is supported by the support structure, and
moving the support means away from the rotatable component to move the rotor blade into an intermediate position.

The support means can be moved in various ways, e.g., by using the previously discussed actuators of the base to shift and/or tilt the connection area of the base and therefore the connection means and the support means. Additionally or alternatively, the full base could be moved with respect to the reference surface, e.g., the deck of the floating device supporting the base. It would, e.g., also be possible to move a floating device or some other support platform supporting the base to move the support means.

Once the rotor blade is in the intermediate position, it can be spaced sufficiently far away from components of the wind turbine to allow a handling by a crane to lifted the rotor blade off the support surface, without the risk of a collision with any components of the wind turbine. It is however also possible, that the rotor blade is clamped by the support means and that the connection means is connected to the connection area of the base by a hinge, as discussed above. While the pivoting of the connection means around the hinge can be blocked, while the rotor blade is supported in the mounted state and in the intermediate state, once the intermediate state is reached, the pivoting can be unblocked and the support means and therefore of the rotor blade clamped by the support means can be lowered by pivoting the connection means.

It should be noted, that the disclosed method for uninstalling a rotor blade essentially corresponds to an execution of the steps of an embodiment the method for installing a rotor blade in reverse order. Therefore, any features discussed with respect to this method, in particular features concerning the mechanical structure of the support structure, the installation of the support structure on a floating device and the compensation of water movement, can also be transferred to the method for uninstalling a rotor blade with the advantages discussed above.

Additionally, a method for servicing a wind turbine is disclosed, that comprises executing an embodiment of the disclosed method for uninstalling a rotor blade to uninstall the previously installed rotor blade and then executing an embodiment of the method for installing a rotor blade according to the present invention, to either reinstall the same rotor blade after servicing the rotor blade or another component of the wind turbine, wherein the service area can, e.g., be inaccessible, while the rotor blade is mounted, or to install a new rotor blade.

The invention also concerns a handling toolkit for supporting a rotor blade during an installation of the rotor blade on a wind turbine and/or during an uninstalling of a rotor blade from a wind turbine. The handling toolkit comprises a support structure for supporting the rotor blade in a mounting position in such a way, that, at least in a supported section of the rotor blade, a longitudinal direction of the rotor blade extends at an angle of less than 45°, in particular of less than 30° or less than 15°, to a horizontal plane. The support structure comprises a support means forming a support surface that is contacting an outer surface of the rotor blade, while the rotor blade is supported by the support structure, a base, and a connection means that connects the support means to a connection area of the base and that is arranged at a height below the lowest point of the support surface. The connection means is sufficiently rigid to vertically support at least part of the combined weight of the support means and the rotor blade and to allow for a transfer of forces that have a force component within the horizontal plane and/or of a torque between the support means and the connection area of the base.

In a preferred embodiment, the handling tool can additionally comprise a floating device, e.g., a barge or a vessel, that provides a reference surface on which the base is arranged. The methods according to the present invention can in particular be implemented by using the handling tool according to the present invention.

Various advantages and features of the handling tool and other advantageous optional components of such a handling tool, e.g., sensors for detecting a relative position and/or orientation, that can also be mounted to components of the wind turbine or even be spaced apart from the wind turbine and the support structure, where already discussed above with reference to the inventive method.

Therefore, it should be noted, that any features discussed with respect to the inventive method for installing a rotor blade on a wind turbine and of the further discussed methods can be transferred to the handling system according to the present invention and vice versa.

The invention also concerns a system comprising a wind turbine comprising a tower having a longitudinal axis, a nacelle being mounted rotatably about a longitudinal axis of the tower to the tower, a rotatable component, in particular a rotor, having a mounting point for at least one rotor blade, the rotatable component being rotatably supported by the nacelle, and a generator being rotatable by the rotatable component for generating electrical energy. The system additionally comprises a handling toolkit according to the present invention and a rotor blade.

Additionally, the invention concerns a method for operating a wind turbine, in particular an offshore wind turbine, further in particular a floating offshore wind turbine, and/or for feeding electrical and/or chemical energy to an electricity and/or chemical grid, the method comprising the following steps:
executing steps of an embodiment or of a combination of embodiments of the method for installing a rotor blade on a wind turbine according to the present invention to provide a finished wind turbine,
generating, by the finished wind turbine, electrical power and/or electrical energy, and in particular generating at least partially from the electrical energy, further in particular, by transforming electrical energy into hydrogen by electrolysis, chemical energy in form of a gas or liquid, in particular in the form of hydrogen,
transmitting, at least partially, the electrical power, the electrical energy, and/or the chemical energy to an energy receiving arrangement, in particular wherein the receiving arrangement is not positioned in international waters, is positioned onshore, and/or is positioned within a 12-miles-zone of a respective sovereign national state over which the respective state has jurisdiction, and
supplying, at least partially, the electrical power, the electrical energy, and/or the chemical energy to an electrical and/or chemical utility grid, in particular to an onshore electrical and/or chemical utility grid and/or chemical/electrical storage.

The term "chemical energy" includes means for storing energy in a chemical substance such as in hydrogen. A chemical energy grid could for example be a gas (hydrogen) grid and/or storage device.

It is to be understood that the features mentioned above, for example the use of sensors spaced apart from the wind turbine and the support structure, as disclosed in the context of the handling tool, and the use of a hinge to erect the support structure, as disclosed in the context of the method, and those yet to be explained below can be used not only in the respective combinations indicated, but also in other combinations or in isolation, without leaving the scope of the present invention. In particular, the features of the different aspects, embodiments, and/or methods of the invention can be combined with each other unless noted to the contrary.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Fig. 1 discloses an intermediate step of an embodiment of the method for installing a rotor blade on a wind turbine according to the present invention, using a system according to the present invention, the system comprising a handling tool according to the present invention,
Fig. 2 discloses a flow chart of an embodiment of the method for installing a rotor blade on a wind turbine according to the present invention,
Fig. 3 discloses a flow chart of an embodiment of the method for operating a wind turbine and for feeding electrical energy to an electricity grid, and
Fig. 4 discloses a further embodiment of a handling tool according to the present invention.

### DETAILED DESCRIPTION

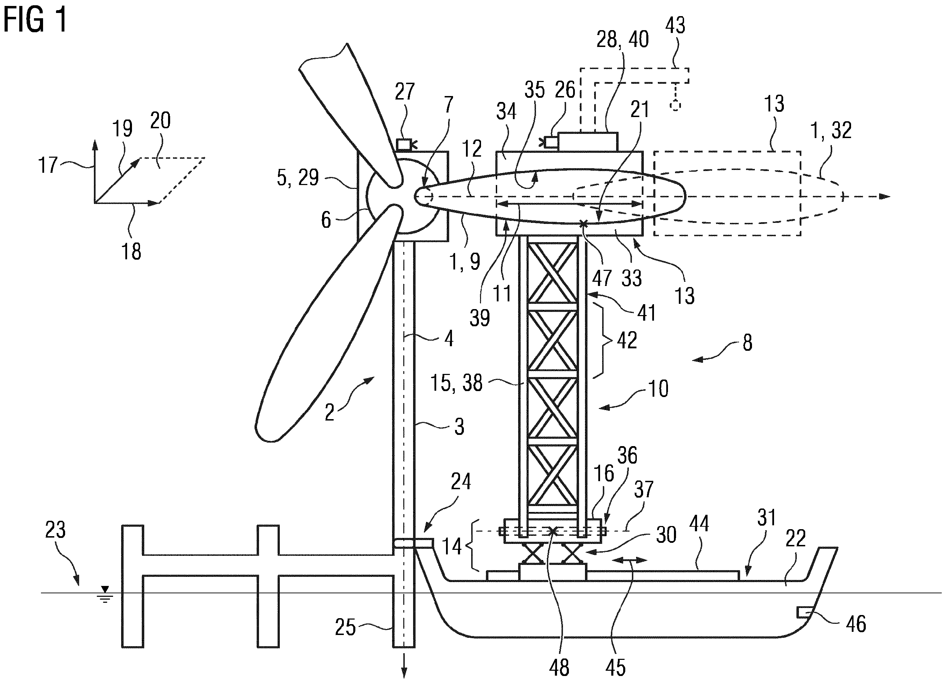

Fig. 1 shows an intermediate step in a method for installing a rotor blade 1 on a wind turbine 2. the wind turbine 2 is a floating offshore wind turbine 2 in the example. The method is implemented using a system comprising the wind turbine 2, a handling toolkit 8 and a rotor blade 1.

In the example, the wind turbine 2 comprises a tower 3 having a longitudinal axis 4, a nacelle 5 being mounted rotatably about a longitudinal axis 4 of the tower 3 to the tower 3, a rotatable component 6, in particular a rotor, having a mounting area 7 for at least one rotor blade 1, the rotatable component 6 being rotatably supported by the nacelle 5, and a generator (not shown) being rotatable by the rotatable component 6 for generating electrical energy.

The longitudinal axis 4 of the tower 2 essentially coincides with the vertical direction 17 in the used global coordinate system shown in fig. 1. The horizontal plane 20, that is orthogonal to the vertical direction 17 is spanned by a first and a second horizontal direction 18, 19, wherein the first horizontal direction 18 essentially coincides with the longitudinal direction 12 of the rotor blade 1 in fig. 1.

The handling tool 8 comprises a support structure 10 for supporting of the rotor blade 1, while it is being mounted to the rotatable component 6. In the example it comprises additional components, namely a floating device 22 that carries the support structure 10 and sensors 26, 27 that are mounted to the support structure 10 itself and to the nacelle 5 of the wind turbine 2.

In the step S1 of the method shown in fig. 1, two of the rotor blades 1 of the wind turbine 2 are already mounted and one of the rotor blades 1 is in the process of being mounted to the rotatable component 6. The rotor blade 1 that is to be mounted is supported in a mounting position 9 by a support structure 10 in such a way, that the longitudinal direction 12 of the rotor blade 2 is essentially horizontal, e.g., at an angle of less than 10° to the first horizontal direction 18.

For simplicity's sake the example in fig. 1 shows a straight rotor blade 1. When a curved rotor blade would be used instead, the longitudinal direction 12 of the rotor blade 1 would change along the rotor blade 1. In this case, the support structure 10 should be configured in such a way, that the longitudinal direction 12 extends approximately horizontally, e.g., at an angle of less than 45°, in particular of less than 30° or less than 15°, to the horizontal plane 20, at least in the supported section 11 of the rotor blade.

The support structure 10 comprises a support means 13 forming a support surface 21 that is contacting an outer surface 39 of the rotor blade 2, while the rotor blade 2 is supported by the support structure 10, a base 14, and a connection means 15 that connects the support means 13 to a connection area 16 of the base 14. The base is arranged at a height below the lowest point 47 of the support surface 21. The connection means 15 is sufficiently rigid to vertically support the combined weight of the support means 13 and the rotor blade 1. To allow for an adjustment of the position and/or orientation of the support surface 21 and therefore of the rotor blade 1 by actuators 30 of the base 14, the connection means 15 is also sufficiently rigid to allow for a transfer of forces that have a force component within the horizontal plane 20 and/or of a torque between from the connection area 16 of the base 14 to the support means 13.

In the example, the base 14 of the support structure 8 is installed on a floating device 22, e.g., on a ship or barge, that is floating on a body of water 23. As already discussed in the general section of the description, it would alternatively be possible, that the floating device 22 would be fully submerged while supporting the rotor blade 1.

To limit the relative movement of the floating device 22 and therefore the support structure 10 with respect to the wind turbine 2, the floating device 22 is anchored to the wind turbine 2 with at least one interlocking device 24, e.g., with a clamp, that interlocks with at least one component 25 of the wind turbine 2 in the example. In the example the component 25 is formed by the floating base of the wind turbine 2. An anchoring of the floating device 22 at a single point can still allow for a certain amount of the relative movement. This movement can, e.g., be compensated by using a propulsion system 46 of the floating device 22. Alternatively or additionally, the interlocking device 24 could be designed in such a way, that a relative movement between the floating device 22 and the wind turbine 2 is strongly limited and/or an anchoring at multiple points using multiple interlocking devices 24 could be used to further limit any relative movement. A certain amount of relative movement between the floating device 22 and the wind turbine 2 will typically still be possible. This movement can advantageously be at least partially compensated. In the example two approaches are used:
On the one hand, a damper 40 is attached to the support means 13 and used to dampen any oscillatory movement of the support means 13. This damper can, e.g., simply be a tank that is partially filled with a fluid, e.g., water. As already discussed in the general part of the description, it would alternatively or additionally be possible to implement such a damper by using a weight that is movable by an actuator with respect to the support means 13.

On the other hand, the actuators 30 of the base 14 of the support structure 10 are used to perform an active motion compensation by shifting the connection area 16 of the base 14 in at least one direction and/or by rotating the connection area 18 of the base around at least one axis 48 with respect to a reference surface 31, namely the deck of the floating device 22, on which the base 14 of the support structure 10 is arranged.

To allow for such a motion compensation, sensor 26, 27 are used to determine the actual movement of the support means 13 and therefore of the rotor blade 1. In the simplest case, the movement can be directly detected by a motion sensor, e.g., by an accelerometer, that can be implemented by the sensor 26. The actuators can then be controlled based on the sensor data, e.g., by phase shifting and scaling the sensor data to provide a control signal for at least one of the actuators 30. As already discussed in the general part of the description, platforms with actuators 30 allowing for such a movement, e.g. for a shifting and/or a tilting, are known in the art and are commercially available as part of motion compensation systems that are typically used to stabilize transported goods and/or cranes.

Additionally or alternatively, the sensors 26, 27 can be or comprise cameras, laser scanners or similar means to provide image data that can be evaluated to determine a position and/or orientation of detected objects to the respective sensor 26, 27. The relative position can also be determined by distance sensors.

In the example sensor 26 is rigidly attached to a component 28 that is rigidly attached to the support means 13, namely to the damper 40. By determining a relative movement of the reference component 29, e.g., the nacelle 5, to the sensor 26, the relative movement between the reference component 29 and the support means 13 and therefore the rotor blade 1 can be determined. On the other hand, the sensor 27 is rigidly mounted to the reference component 29 and can, e.g., directly detected the relative position and/or orientation of the rotor blade 1 and/or the support means 13.

The actuators 30 can then be controlled based on an error signal that is determined based on the difference between a defined desired relative position and/or orientation and the actual measured position and/or orientation to minimize the error signal. Since any movement of the floating device 22 with respect to the wind turbine 2 due to waves or other currents will lead to an error in the position and/or orientation, this error can be compensated or at least reduced by the discussed control scheme.

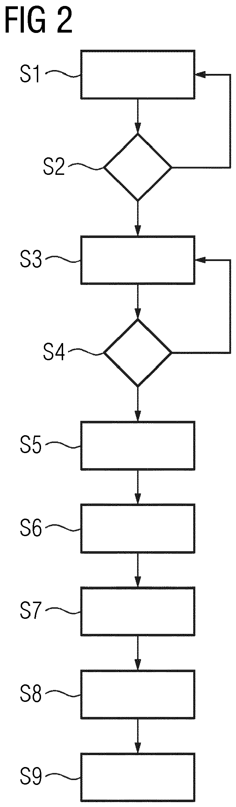

In principle it would be sufficient, to rely on gravity to keep the rotor blade one on the support surface 21, when the center of gravity of the rotor blade 1 is placed in the area of the support surface 21. To ensure that the rotor blade 1 is robustly held on the support surface 21, even when the rotor blade 1 is moved while it is on the support a surface 21, as discussed later with reference to the flowchart in the fig. 2, the rotor blade 1 is clamp between the support surface 21 and that clamping surface 35 in the example shown in fig. 1. To allow for such a clamping, the support means 13 comprises a first section 33 forming the support surface 21 and a second section 34 forming a clamping surface 35. The second section 34 is movable with respect to the first section 33, to allow for a clamping and unclamping of the rotor blade 1, e.g., when firstly putting the rotor blade 1 onto the support surface 21 and/or when removing the support means from the rotor blade 1 after it is mounted. The first and second section 33, 34 can, e.g., be connected by a hinge (not shown) and the relative movement can be performed by an actuator (not shown).

To allow for an adjustment of the support structure 10 for the use with different models of wind turbines, it is advantageous to use a modular design of the support structure 10. It can, e.g., be advantageous, when different support means 13 can be used to support different types of rotor blades having different lengths and/or shapes. In an especially advantageous embodiment, the connection means 15 is formed from multiple longitudinal segments 42. By adding or removing some of these segments 42, the height of the connection means 15 and therefore of the support surface 21 can be adjusted, e.g., to allow for a use of the support structure with wind turbines of different height.

An exemplary embodiment of the method for installing the rotor blade 1 will now be discussed in more detail with additional reference to the flowchart in fig. 2.

In a step S1, the installation process is prepared by moving the floating device 22 to the position shown in fig. 1 and optionally by using the interlocking device 24 to stabilize its position. To avoid the need to perform a motion compensation during the full transport of the support structure 10 to the wind turbine 2, the support structure 10 is essentially lying flat during this step and is only erected later in the exemplary embodiment. As will be discussed later, the pivoting of the connection means 15 from the initial, approximately flat position into the working position 38 shown in fig. 1 can also be used to lift up of the rotor blade 1 to the height shown in fig. 1. Therefore, the rotor blade 1 is already clamped between the support surface 21 and the clamping surface 35 during or before a step S1.

In Step S2 an enabling condition evaluates weather forecast information that can, e.g., be provided by a radio or satellite communication. When the enabling condition is not fulfilled, the installation of the rotor blade 1 is temporarily aborted and delayed, until the enabling condition is fulfilled, therefore returning to step S1. The installation of the rotor blade 1 can therefore be delayed, when impeding bad weather could, e.g., lead to a damage of the components or tools during the installation.

If, on the other hand, the enabling condition is fulfilled in a step S2, the rotor blade 1 is moved to an intermediate position 13, in which it is already arranged at approximately the same height and orientation, that are desired for the mounting position 9. The intermediate position 23 is however spaced apart from the mounting position 9 within the horizontal plane 20, especially along the first horizontal direction 18, to ensure a sufficient distance between the rotor blade 1 and the components of the wind turbine 2 during the initial movement of the rotor blade 1.

The movement of the rotor blade 1 into the intermediate position 32 is performed by pivoting the connection means 15 from an initial position upwards into a working position 38 via a hinge 36 that is used to connect the connection means 15 to the base 14. As already discussed in the general section of the description, this pivoting can, e.g., be driven by a winch pulling the connection means 15 into the working position 15.

Since the rotor blade 1 is already clamped by the support means 13, as discussed above, the pivoting of the connection means 15 lifts the rotor blade 1 upwards into the intermediate position 13, wherein the base 14 is initially arranged below this intermediate position 13. A pivoting of the connection means 15 around the hinge 36 is then blocked, to hold the connection means 15 in the working position 38.

Alternatively, it would, e.g., be possible to use a crane 43 to lift the rotor blade 1 onto the support surface 20 one after the support surface 21 is already located at the correct height.

When at least one sensor 27 mounted to a component of the wind turbine 2 is used, as shown in fig. 1, this sensor can also be installed in step S3.

In step S4, a further enabling condition is evaluated. The further enabling condition can take into account updated weather forecast information. Additionally, the further enabling condition evaluates the sensor data from the sensors 26 and 27, to estimate a relative movement between the support structure 10 and therefore the rotor blade 1 and the wind turbine 2. This relative movement is a good measure for the influence of the roughness of the sea and/or the wind conditions on the mounting process. If the sensor data and optionally the updated weather forecast information indicate, that the mounting of the rotor blade 1 is possible without the risk of damaging relevant components and/or tools, the further enabling condition is fulfilled and the method continues to step S5. Otherwise of the installation is paused or aborted.

in step S5 the rotor blade 1 is moved from the intermediate position 32 into the mounting position 9. To allow for the relatively large shifting distance between the intermediate position 13 and the mounting position 9 shown in fig. 1, the full base 14 can be shifted, as indicated by the arrow 45, along guiding means 44, e.g., rails, with one of the actuators 30. The other actuators 30 can then serve to adjust the height of the connection area 16 with respect to the reference surface 31, tilt the connection area 16 and/or perform smaller shifts within the horizontal plane 20 for a fine adjustment of the position.

It is optionally possible, to use an additional tool to align the root of the rotor blade 1 with the mounting area 7, in particular the tool known from the document US 11,174,845 B2.

Once the mounting position 9 is reached, the rotor blade 1 is supported in this mounting position 9 and a motion compensation by the actuators 30 is used to compensate the relative motion of the floating device 22 and the wind turbine 2 at least partially, as discussed above.

In the step S7, the rotor blade 1 is mounted to the mounting area 7, e.g., by a bolt connection.

Once the mounting is finished, the second section 34 of the support means 13 is moved with respect to the first section 33 of the support means 13 in step S8 to unclamp the rotor blade 1.

In step S9 the support surface 21, is then removed from the outer surface 39 of the rotor blade 1, e.g., by lowering the support means 13 using the actuators 30 and then moving the base away from of the wind turbine along the guiding means 44. Once the support structure 10 is sufficiently far away from any components of the wind turbine 2, the connection means 15 can, e.g., be pivoted from the working position 38 shown in fig. 1 to a storage position in which the connection means 15 lies essentially flat on the floating device 22, to pick up another rotor blade via clamping and/or to move the floating device 22 to another wind turbine. Alternatively, the support structure 10 could, e.g., be disassembled once the rotor blade 1 is mounted.

Especially when multiple blades 1 are to be mounted, dismounted and/or serviced, it can also be advantageous to switch between different mounting areas 7, at which a respective rotor blade 1 is to be supported. This can be achieved without the need to distance the support structure far apart from the rotatable component 6, e.g., by using the following approach: After mounting a first rotor blade 1, the rotatable component 6 can be slightly rotated to lift the first rotor blade 1 off the support surface 21. Afterwards, the nacelle 5 can be rotated around the longitudinal direction 4 of the tower 3 to shift the rotational plane of the rotor blades 1 away from the support structure 10. The rotatable component 6 can then be rotated to turn a different one of the mounting areas 7 towards the support structure 10 and the nacelle 5 can then be rotated again to align the plane of rotation of the rotor blades with the support surface 21, to support the next rotor blade on the support surface 21.

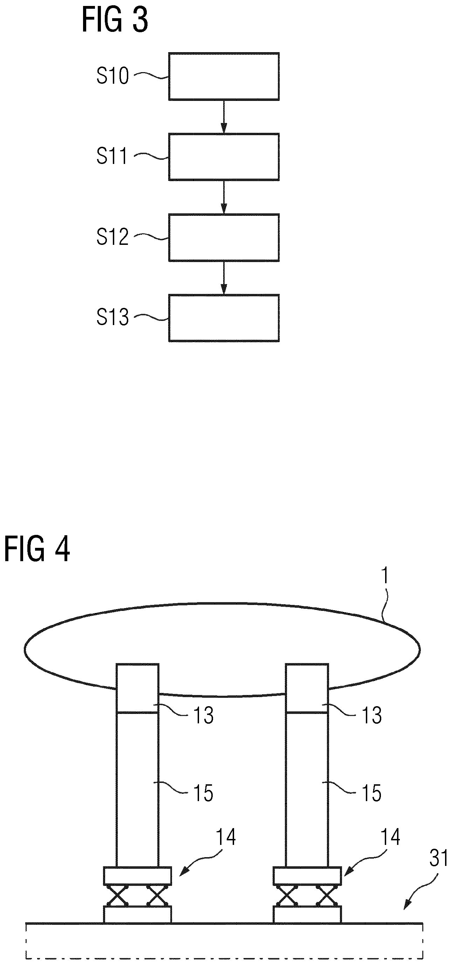

Fig. 3 shows a flowchart of an exemplary embodiment of a method for operating a wind turbine 2 and for feeding electrical energy to an electricity grid (not shown). In step S10, the steps of the method discussed with reference to fig. 2 are performed to install the rotor blade 1 on the wind turbine 2, to provide a finished wind turbine 2. In step S11, electrical power and/or electrical energy is generated by the finished wind turbine 2.

The electrical power and/or electrical energy is transmitted, at least partially, to an energy receiving arrangement (not shown) in step S12. I the example the energy receiving arrangement is not positioned in international waters, is positioned onshore, and/or is positioned within a 12-miles-zone of a respective sovereign national state over which the respective state has jurisdiction. The electrical power and/or the electrical energy is then provided to an electrical utility grid (not shown), in particular to an onshore electrical utility grid and/or to an electrical storage in step S4.

As already discussed in the general section of the description, the described embodiment could be modified to provide chemical energy to a chemical grid, by generating chemical energy in the form of a gas or a liquid from the electrical energy, in particular, by transforming electrical energy into hydrogen by electrolysis, and by then transmitting and supplying this gas or liquid.

In the example of the support structure 10 shown in fig. 1, only a single support means 13, connection means 15 and based 14 is used for simplicity's sake. The use of a single support means 13 can however lead to the need to use a relatively large support means 13, which can increase the weight and cost of the support structure 10.

Fig. 4 therefore shows an alternative embodiment of the handling tool, in which the support structure comprises multiple instances of the support means 13. the rotor blade 1 is therefore supported in multiple longitudinal sections that are spaced apart from each other. In the example a separate connection means 15 and based 14 is used for each of the separate support means 13. It would however also be possible, to use a common base 14 and/or a common connection means 15 to support both support means 13.

The example in fig. 4 also uses a simpler structure of the support means 13, in which the rotor blade 1 is held on the support surface only by way of gravity. No additional clamping is applied. It would of course be possible, to use of the clamping discussed with respect to fig. 1 also in the embodiment shown in fig. 4 or to use the simpler support means 13 that are shown in fig. 4 instead of the more complex support means 13 in the embodiment according to fig 1.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein. It has to be noted, that embodiments of the invention have been described with reference to different subject matters. In particular, some embodiments have been described with reference to apparatus type claims, such as the use of sensors spaced apart from the wind turbine and the support structure disclosed in the context of the handling tool, whereas other embodiments have been described with reference to method type claims, such as the use of a hinge to erect the support structure. However, a person skilled in the art will gather from the above that, unless otherwise notified, in addition to any combination of features belonging to one type of subject matter also any combination between features relating to different subject matters, in particular between features of the apparatus type claims and features of the method type claims, is considered as to be disclosed with this application.

## Claims

1. A method for installing a rotor blade (1) on a wind turbine (2), in particular on an offshore wind turbine (2), further in particular on a floating offshore wind turbine (2), comprising the steps:
supporting the rotor blade (1) in a mounting position (9) by a support structure (10) in such a way, that, at least in a supported section (11) of the rotor blade (1), a longitudinal direction (12) of the rotor blade (2) extends at an angle of less than 45°, in particular of less than 30° or less than 15°, to a horizontal plane (20),
wherein the support structure (10) comprises
a support means (13) forming a support surface (21) that is contacting an outer surface (39) of the rotor blade (2), while the rotor blade (2) is supported by the support structure (10),
a base (14), and
a connection means (15) that connects the support means (13) to a connection area (16) of the base (14) that is arranged at a height below the lowest point (47) of the support surface (21),
wherein the connection means (15) is sufficiently rigid to vertically support at least part of the combined weight of the support means (13) and the rotor blade (1) and to allow for a transfer of forces that have a force component within the horizontal plane (20) and/or of a torque between the support means (13) and the connection area (16) of the base (14);
mounting the rotor blade (1) to a rotatable component (6) of the wind turbine (2), in particular to a hub, while the rotor blade (1) is supported by the support structure (10); and
moving or disassembling the support structure (10) and/or rotating a nacelle (5), which is mounted rotatably about a longitudinal axis (4) of a tower (3) of the wind turbine (2) and which rotatably supports the rotatable component (6), to allow for a rotation of the rotatable component (6).

2. The method according to claim 1, wherein the base (14) of the support structure (8) is installed on a floating device (22), in particular on a barge or vessel, floating on or in a body of water (23).

3. The method according to claim 2, wherein the floating device (22) comprises at least one interlocking device (24), in particular a clamp, that interlocks with at least one component (25) of the wind turbine (2), while the rotor blade (1) is supported in the mounting position (9), to block or limit a relative movement between the floating device (22) and the wind turbine (2).

4. The method according to one of the preceding claims, wherein at least one sensor (26, 27) is used to determine
on the one hand, a relative position and/or a relative orientation of the rotor blade (2) and/or the support means (13) and/or a component (28) that is rigidly attached to the support means (13) with respect to at least one reference component (29) of the wind turbine (2), and/or
on the other hand, a movement of the rotor blade (2) and/or at least one component (28) of the support structure (10),
wherein at least one actuator (30) of the base (14) is controlled based on the relative position and/or the relative orientation and/or the movement, to shift the connection area (16) of the base (14) in at least one direction and/or to rotate the connection area (18) of the base around at least one axis (48) with respect to a reference surface (31) on which the base (14) of the support structure (10) is arranged.

5. The method according to claim 2 or 3 and claim 4, wherein the actuator (30) of the base (14) is controlled in such a way, as to reduce a movement of the support structure (10) when the floating device (22) forming the reference surface (31) is moved due to a movement of water in the body of water (23).

6. The method according to claim 4 or 5, wherein mounting position (9) corresponds to a given relative position and/or a given relative orientation of the rotor blade (2) and/or the support means (13) and/or a component (28) that is rigidly attached to the support means (13) with respect to at least one reference component (29) of the wind turbine (2), wherein the method comprises the additional steps of
supporting the rotor blade (1) in an intermediate position (32) by the support structure (13) in such a way, that, at least in a supported section (11) of the rotor blade (1), the longitudinal direction (12) of the rotor blade (1) extends at an angle of less than 45°, in particular of less than 30° or less than 15°, to the horizontal plane (20), and
moving the rotor blade (1) from the intermediate position (32) to the mounting position (9) by controlling the actuator (30) to iteratively reduce on the one hand the distance between the determined relative position and the given relative position and/or on the other hand the difference between the determined relative orientation and the given relative orientation.

7. The method according to one of the preceding claims,
wherein the support means (13) comprises a first section (33) forming the support surface (21) and a second section (34) forming a clamping surface (35),
wherein the turbine blade (1) is clamped between the support surface (21) and the clamping surface (35), while the rotor blade (1) is being mounted to the rotatable component,
wherein the second section (34) is moved with respect to the first section (33) before or during the removal or disassembly of the support structure (10) and before the support surface (21) is separated from the rotor blade (1) to unclamp the rotor blade (1).

8. The method according to one of the preceding claims, wherein the connection means (15) is mounted to the base (14) by a hinge (36), which is used to pivoted the connection means (15) from an initial position upwards into a working position (38), wherein a pivoting of the connection means (15) around the hinge (36) is blocked once the working position (38) of the connection means (15) is reached, to hold the connection means (15) in the working position (38), while the support structure (10) is used to support the rotor blade (1) in the mounting position (9).

9. The method according to claim 7 and 8, wherein the rotor blade (1) is already clamped between the support surface (21) and the clamping surface (35), while the connection means (15) is pivoted from the initial position or a clamping position at which of the clamping is performed to the working position (38).

10. The method according to one of the claims 1 to 8, **characterized in that** the rotor blade is lifted onto the support surface (21) using a crane (43), wherein the rotor blade (1) is either placed directly in the mounting position (9) by placing it onto the support surface (21) or placed in the or an intermediate position (32) by placing it onto the support surface (21) and moved from the intermediate position (32) to the mounting position (9) by conjointly moving the support means (13) and the connection area (16) of the base (14) without changing the relative position of the support means (13) and the connection area (16) of the base (14).

11. The method according to one of the preceding claims, **characterized in that** a damper (40), in particular a tank that is partially filled with a fluid and/or a weight that is movable by an actuator with respect to the support means (13), is attached to the support means (13) or an upper section (41) of the connection means (15) and used to dampen an oscillatory movement of the support means (13), while the support structure (10) is used to support the rotor blade (1) in the mounting position (9).

12. The method according to one of the preceding claims, wherein a respective enabling condition is evaluated before performing at least one of the steps of
supporting the rotor blade (1) in the mounting position (9),
moving the rotor blade (1) from the intermediate position (32) to the mounting position (9),
supporting the rotor blade (1) in the intermediate position (32),
pivoting the connection means (15) from the initial position upwards into the working position (38), and
lifting the rotor blade (1) onto the support surface (21),
wherein the enabling condition evaluates a provided weather forecast information and/or sensor data acquired by at least one sensor (26, 27), wherein the sensor data describes
on the one hand a movement of the rotor blade (1) and/or at least one component (28) of the support structure (10), and/or
on the other hand a relative position and/or a relative orientation of the rotor blade (1) and/or of the support means (13) and/or of a component (28) that is rigidly attached to the support means (13) with respect to at least one reference component (29) of the wind turbine (2),
wherein the installation of the rotor blade (1) is temporarily paused or aborted and delayed until the enabling condition is fulfilled, when the enabling condition is not fulfilled.

13. A handling toolkit for supporting a rotor blade (1) during an installation of the rotor blade (1) on a wind turbine (2) and/or during an uninstalling of the rotor blade (1) from a wind turbine (2),
wherein the handling toolkit (8) comprises a support structure (10) for supporting the rotor blade (1) in a mounting position (9) in such a way, that, at least in a supported section (11) of the rotor blade (1), a longitudinal direction (12) of the rotor blade () extends at an angle of less than 45°, in particular of less than 30° or less than 15°, to a horizontal plane (20), wherein the support structure (10) comprises
a support means (13) forming a support surface (21) that is contacting an outer surface (39) of the rotor blade (1), while the rotor blade (1) is supported by the support structure (10),
a base (14), and
a connection means (15) that connects the support means (13) to a connection area (16) of the base (14) and that is arranged at a height below the lowest point (47) of the support surface (21),
wherein the connection means (15) is sufficiently rigid to vertically support at least part of the combined weight of the support means (39) and the rotor blade (1) and to allow for a transfer of forces that have a force component within the horizontal plane (20) and/or of a torque between the support means (13) and the connection area (16) of the base (14).

14. A system comprising a wind turbine (2) comprising a tower (3) having a longitudinal axis (4), a nacelle (5) being mounted rotatably about a longitudinal axis (4) of the tower (3) to the tower (3), a rotatable component (6), in particular a rotor, having a mounting area (7) for at least one rotor blade (1), the rotatable component (6) being rotatably supported by the nacelle (5), and a generator being rotatable by the rotatable component (6) for generating electrical energy, a handling toolkit (8) according to claim 12, and a rotor blade (1).

15. A method for operating a wind turbine (2), in particular an offshore wind turbine (2), further in particular a floating offshore wind turbine (2), and/or for feeding electrical and/or chemical energy to an electricity and/or chemical grid, the method comprising the following steps:
executing steps of an embodiment or of a combination of embodiments of the method for installing a rotor blade (1) on a wind turbine (2) of one of the preceding claims to provide a finished wind turbine,
generating, by the finished wind turbine (2), electrical power and/or electrical energy, and in particular generating at least partially from the electrical energy, further in particular, by transforming electrical energy into hydrogen by electrolysis, chemical energy in form of a gas or liquid, in particular in the form of hydrogen,
transmitting, at least partially, the electrical power, the electrical energy, and/or the chemical energy to an energy receiving arrangement, in particular wherein the receiving arrangement is not positioned in international waters, is positioned onshore, and/or is positioned within a 12-miles-zone of a respective sovereign national state over which the respective state has jurisdiction, and
supplying, at least partially, the electrical power, the electrical energy, and/or the chemical energy to an electrical and/or chemical utility grid, in particular to an onshore electrical and/or chemical utility grid and/or chemical/electrical storage.
